(19) Europäisches Patentamt / European Patent Office / Office européen des brevets

(11) **EP 3 834 964 B1**

(12) **EUROPEAN PATENT SPECIFICATION**

(45) Date of publication and mention
of the grant of the patent:
**27.09.2023 Bulletin 2023/39**

(21) Application number: **20792268.3**

(22) Date of filing: **19.05.2020**

(51) International Patent Classification (IPC):
*B29C 64/153* $^{(2017.01)}$    *B22F 3/105* $^{(2006.01)}$
*B22F 3/16* $^{(2006.01)}$    *B33Y 10/00* $^{(2015.01)}$
*B33Y 30/00* $^{(2015.01)}$    *B29C 64/268* $^{(2017.01)}$
*B29C 64/277* $^{(2017.01)}$    *B22F 10/50* $^{(2021.01)}$
*B22F 10/66* $^{(2021.01)}$    *B22F 12/45* $^{(2021.01)}$
*B22F 12/49* $^{(2021.01)}$    *B29C 64/241* $^{(2017.01)}$
*B29C 64/264* $^{(2017.01)}$    *B33Y 40/00* $^{(2020.01)}$
*B33Y 40/20* $^{(2020.01)}$    *B22F 10/28* $^{(2021.01)}$

(52) Cooperative Patent Classification (CPC):
**B29C 64/153; B22F 10/50; B22F 10/66;
B22F 12/45; B22F 12/49; B29C 64/241;
B29C 64/264; B29C 64/277; B33Y 10/00;
B33Y 30/00; B33Y 40/00; B33Y 40/20;** B22F 10/28;
Y02P 10/25

(86) International application number:
**PCT/JP2020/019712**

(87) International publication number:
**WO 2021/079548 (29.04.2021 Gazette 2021/17)**

(54) **THREE-DIMENSIONAL SHAPING METHOD AND THREE-DIMENSIONAL SHAPING DEVICE**

VERFAHREN UND VORRICHTUNG ZUR DREIDIMENSIONALEN FORMGEBUNG

DISPOSITIF DE FAÇONNAGE TRIDIMENSIONNEL ET PROCÉDÉ DE FAÇONNAGE TRIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2019 JP 2019192192**

(43) Date of publication of application:
**16.06.2021 Bulletin 2021/24**

(60) Divisional application:
**22215238.1 / 4 177 042**

(73) Proprietor: **Matsuura Machinery Corporation
Fukui City, Fukui (JP)**

(72) Inventors:
• **AMAYA, Koichi
Fukui City
Fukui 9108530 (JP)**
• **YOSHIDA, Mitsuyoshi
Fukui City
Fukui 9108530 (JP)**
• **TOMITA, Seiichi
Fukui City
Fukui 9108530 (JP)**
• **SASAKI, Shota
Fukui City
Fukui 9108530 (JP)**

(74) Representative: **Lambacher, Michael et al
V. Füner Ebbinghaus Finck Hano
Patentanwälte
Mariahilfplatz 3
81541 München (DE)**

(56) References cited:
**JP-A- H06 192 702      JP-A- 2003 127 238
JP-A- 2009 006 509      JP-A- 2014 136 329
US-A1- 2013 270 750     US-A1- 2015 283 611
US-A1- 2019 151 945**

## Description

## Technical Field

The present invention relates to a three-dimensional shaping method and a three-dimensional shaping apparatus which employ a plurality of galvano scanners that scan laser beams along two-dimensional directions which are sequentially focused through dynamic focus lenses.

## Background Art

For three-dimensional shaping in which a sintered surface is formed by irradiating a laser beam onto a powder layer layered on a table, a laser beam that has been transmitted through a dynamic focus lens with an adjustable focal length is used for scanning on the sintered surface with a galvano scanner.

The invention described in Patent Document 1 (hereunder referred to as "prior invention 1") is disclosed as a three-dimensional shaping method wherein, instead of using a single galvano scanner to carry out the scanning, more than one are used and laser beams that have been transmitted through a plurality of galvano scanners are irradiated in slanted directions onto a surface of the table to carry out efficient scanning with a plurality of laser beams, and to allow the space required for three-dimensional shaping to be made more compact compared to irradiation in the perpendicular direction, while the invention described in Patent Document 2 (hereunder referred to as "prior invention 2") is disclosed as a construction for a three-dimensional shaping apparatus in which a plurality of galvano scanners 3, 3a are used and laser beams 7, 7a that have been transmitted through the plurality of galvano scanners 3, 3a are irradiated in slanted directions onto the surface of the table, to exhibit the same effect.

With prior inventions 1 and 2, however, the scanning is carried out with the laser beams 7, 7a over an entire flat surface located on the upper side of an entire region surface of a table 13 (for Patent Document 1, see the disclosure regarding scanning of the entire flat surface, in Fig. 1, Abstract, column 3 line 22, column 4 line 40 and claim 1, and for Patent Document 2, see the disclosure regarding common scanning of the entire flat surface in Fig. 1, Abstract, column 3 line 9 and column 4 line 26, as well as the disclosure regarding movement of the laser beams traversing the flat surface in claim 1).

The flat surface corresponds to a focal plane 5 formed for control of focus-adjusting units 9, 9a (Fig. 4 in Patent Document 1 and Fig. 4 in Patent Document 2), however, sintering is not carried out by irradiation with the laser beams 7, 7a over the entire region of the focal plane 5, but rather, it is essential for the focus-adjusting units 9, 9a to be controlled for irradiation at the focal points of the laser beams 7, 7a only in the regions of the focal plane 5 that require sintering, while keeping focus of the laser beams 7, 7a from reaching the focal plane 5 in regions that do not require sintering.

This is because, without such control, the entire region on the entire flat surface, in other words, the focal plane 5 will be constantly subjected to sintering and make it impossible to select only the regions that require the sintered surface to be formed according to each focal plane 5.

However, irradiation in which the laser beams are scanned over the regions where the sintered surface is not to be formed is an inefficient system for the three-dimensional shaping, in terms of excess scanning and irradiation.

The galvano scanners 3, 3a of prior inventions 1 and 2 are each naturally provided with first mirrors that reflect the laser beams 7, 7a that have been transmitted through the focus-adjusting units 9, 9a, and second mirrors that further reflect the laser beams 7, 7a that have been reflected by the first mirrors.

However, prior inventions 1 and 2 do not sufficiently explain the first mirrors and the second mirrors, and consequently it is unclear how the first mirrors and the second mirrors are disposed on the top surface of the table 13 with a center location as reference, and therefore any locations may be selected.

Naturally, therefore, a design may be selected in which each second mirror is disposed on an outer side with respect to each first mirror, with the center location of the surface of the table 13 as reference.

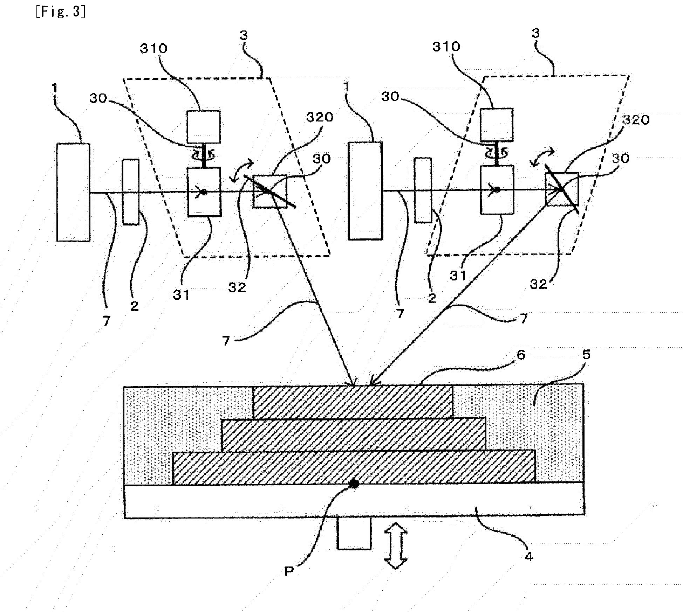

Incidentally, Fig. 3 of prior inventions 1 and 2 suggests that each second mirror is disposed on an inner side with respect to each first mirror, with the center location as reference, however, since Fig. 3 is nothing more than an illustration of an embodiment (the portion shown in Fig. 3), the disclosure in Fig. 3 cannot be used as support for denying the selection mentioned above.

With such a design, however, spacing between the second mirrors becomes wider compared to the opposite design, i.e. a design in which the second mirrors are disposed on the inner side with respect to the first mirrors with the center location as reference, naturally creating an unavoidable disadvantage whereby brightness decreases with greater distance from the center location when the laser beam forms the sintered surface beyond the center location, while in addition, an approximately ellipsoid sintered surface is formed instead of an approximately circular sintered surface when the surface of the table is irradiated in the vertical direction, leading to formation of an inaccurate sintered surface shape and causing outlines at borders of the sintered surface to become indistinct.

Moreover, the direction of a rotation axis on which the second mirror oscillates is unspecified in prior inventions 1 and 2, resulting in technical disadvantages which will be explained below.

Moreover, US 2019/151945 A1 refers to a lamination molding apparatus with a molding table. The apparatus comprises a laser beam emitter configured to irradiate a predetermined small irradiation region on the molding table with a laser beam, an inert gas supplying nozzle, a fume suction duct, an integration unit and a moving device. The laser beam emitter scans and irradiates the laser beam and includes first and second laser sources, first and second galvanometer mirror units and first and second focus control units.

Further, US 2015/283611 A1 describes a three-dimensional molding equipment which includes powder supply equipment configured to supply powder material and form a powder layer, and a light beam scanning unit configured to radiate a light beam to the powder layer and move a radiated location thereof. A region used for manufacturing the three-dimensional shaped molding object is divided into a plurality of divided regions such that respective divided regions have an equal-length molding path. Radiation is executed by a plurality of the light beam scanning units to the respective plurality of divided regions to improve molding efficiency.

## Prior Art Documents

## Patent Documents

Patent Document 1: US 10,029,333 B2
Patent Document 2: US 9,314,972 B2

## Summary of Invention

## Technical Problem to be Solved

It is an object of the present invention to provide a construction for three-dimensional shaping that includes a plurality of galvano scanners for laser beams being transmitted through dynamic focus lenses, in a manner allowing efficient and uniform two-dimensional scanning and irradiation of the laser beams.

## Solution to Solve the Problem

In order to achieve the object stated above, the basic construction of the present invention is as follows:

(1) A three-dimensional shaping method comprising the processes of laminating powder on a table by traveling of a squeegee, sintering a laminated powder layer by irradiation of laser beams, and cutting a sintered layer by traveling of a cutting tool, wherein during the irradiation, a plurality of galvano scanners are employed that carry out scanning in two-dimensional directions based on orthogonal coordinates of the laser beams that have been transmitted through dynamic focus lenses by reflection of the laser beams from first mirrors that oscillate on rotation axes in directions perpendicular to the transmission direction and second mirrors that are perpendicular to the directions of the rotation axes of the first mirrors in an independent state from oscillation of the first mirrors and that oscillate on rotation axes in horizontal directions, and regions of sintered surface produced by the irradiation of the laser beams that have been transmitted through each galvano scanner are freely selectable by free adjustment of oscillation range of each first mirror and second mirror, and the laser beams are irradiated on the sintered surface at focus location or its vicinity by adjustment of the focal lengths of the dynamic focus lenses, and each first mirror is disposed on an outer side from each second mirror with reference to a center location of a surface of the table.

(2) A three-dimensional shaping method comprising the processes of laminating powder on a table by traveling of a squeegee, sintering a laminated powder layer by irradiation of laser beams, and cutting a sintered layer by traveling of a cutting tool, wherein during the irradiation, a plurality of galvano scanners are employed that carry out scanning in two-dimensional directions based on cylindrical coordinates of the laser beams that have been transmitted through dynamic focus lenses by reflection of the laser beams from first mirrors that oscillate on rotation axes in directions perpendicular to the transmission direction and second mirrors that oscillate in unison with them at equidistant locations on periphery of the rotation axes by being connected to the rotation axes of the first mirrors through arms that are perpendicular to the directions of the rotation axes of the first mirrors and moreover that oscillate on rotation axes in horizontal directions, and regions of sintered surface produced by the irradiation of the laser beams that have been transmitted through each galvano scanner are freely selectable by free adjustment of oscillation range of each first mirror and oscillation range of each second mirror, and the laser beams are irradiated on the sintered surface at focus location or its vicinity by adjustment of the focal lengths of the dynamic focus lenses, and each first mirror is disposed on an outer side from each second mirror with reference to a center location of a surface of the table.

(3) A three-dimensional shaping apparatus comprising a squeegee that laminates powder on a table by traveling over it, a sintering apparatus that irradiates a powder layer with laser beams, and a cutting tool that cuts a sintered layer while traveling, wherein during the irradiation, a plurality of galvano scanners are employed that carry out scanning in two-dimensional directions based on orthogonal coordinates of the laser beams that have been transmitted through dynamic focus lenses by reflection of the laser beams from first mirrors that oscillate on rotation axes in directions perpendicular to the transmission direction and second mirrors that are perpendicular to the directions of the rotation axes of the first mirrors in an independent state from oscillation of the first mirrors and that oscillate on the rotation axes in horizontal directions, and controllers allowing free adjustment of oscillation ranges of oscillation drive unit for each first mirror and oscillation drive unit for each second mirror are provided to allow free selection of regions of sintered surface produced by the irradiation of the laser beams, and the laser beams are irradiated on the sintered surface at focus location or its vicinity by adjustment of the focal lengths of the dynamic focus lenses, and each first mirror is disposed on an outer side from each second mirror with reference to a center location of a surface of the table.

(4) A three-dimensional shaping apparatus comprising a squeegee that laminates powder on a table by traveling over it, a sintering apparatus that irradiates a powder layer with laser beams, and a cutting tool that cuts a sintered layer while traveling, wherein during the irradiation, a plurality of galvano scanners are employed that carry out scanning in two-dimensional directions based on cylindrical coordinates of the laser beams that have been transmitted through dynamic focus lenses by reflection of the laser beams from first mirrors that oscillate on rotation axes in directions perpendicular to the transmission direction and second mirrors that oscillate in unison with them at equidistant locations on periphery of the rotation axes by being connected to the rotation axes of the first mirrors through arms that are perpendicular to the directions of the rotation axes of the first mirrors and moreover that oscillate on the rotation axes in horizontal directions, and controllers allowing free adjustment of oscillation range of oscillation drive unit for each first mirror and oscillation range of oscillation drive unit for each second mirror are provided to allow free selection of regions of sintered surface produced by the irradiation of the laser beams, and the laser beams are irradiated on the sintered surface at focus location or its vicinity by adjustment of the focal lengths of the dynamic focus lenses, and each first mirror is disposed on an outer side from each second mirror with reference to a center location of a surface of the table.

(5) The three-dimensional shaping method according to any one of (1) or (2) above, wherein the first mirror of each galvano scanner oscillates on a rotation axis in the vertical direction perpendicular to the surface of the table.

(6) The three-dimensional shaping apparatus according to any one of (3) or (4) above, wherein the first mirror of each galvano scanner oscillates on a rotation axis in the vertical direction perpendicular to the surface of the table.

(7) The three-dimensional shaping method according to any one of (1) or (2) above, wherein the first mirror of each galvano scanner oscillates on a rotation axis in a slanted direction with respect to the surface of the table.

(8) The three-dimensional shaping apparatus according to any one of (3) or (4) above, wherein the first mirror of each galvano scanner oscillates on a rotation axis in a slanted direction with respect to the surface of the table.

(9) The three-dimensional shaping method according to any one of (1) or (2) above, wherein during oscillation of the second mirror of each galvano scanner, light reflected at the stage of forming the center location of amplitude by oscillation is in a slanted direction with respect to the surface of the table.

(10) The three-dimensional shaping apparatus according to any one of (3) or (4) above, wherein during oscillation of the second mirror of each galvano scanner, light reflected at the stage of forming the center location of amplitude by oscillation is in a slanted direction with respect to the surface of the table.

**Advantageous Effects of Invention**

With the three-dimensional shaping methods of basic constructions (1) and (2) and the three-dimensional shaping apparatuses of basic constructions (3) and (4), it is possible to achieve the same effect as with prior inventions 1 and 2 in terms of carrying out efficient scanning by the plurality of the laser beams after having set a compact space for the three-dimensional shaping, while in addition, even when malfunctions or accidents have occurred with specific galvano scanners, it is possible to clear the malfunctions or accidents by operating other galvano scanners as an effect that is likewise similar to those of prior inventions 1 and 2.

For most cases, when considering size of the galvano scanners in the horizontal direction and area of the surface of the table, actual number of the plurality of the galvano scanners of basic constructions (1), (2), (3) and (4) will be from 2 to 6.

For basic constructions (1), (2), (3) and (4), however, free adjustment of the oscillation ranges of the first mirrors and the oscillation ranges of the second mirrors allows irradiation of the sintered surface by all of the laser beams that have been transmitted through the plurality of the galvano scanners, so that excess scanning and irradiation of prior inventions 1 and 2 can be avoided.

As a result, three-dimensional shaping can be carried out more efficiently than with prior inventions 1 and 2 in terms of the scanning and energy consumption for the three-dimensional shaping.

In addition, since the directions of the rotation axes on which the first mirrors oscillate are in directions perpendicular to the directions in which the laser beams are transmitted, and the rotation axes on which the second mirrors oscillate are perpendicular to the directions of the rotation axes of the first mirrors and in horizontal directions, it is possible to carry out uniform scanning of the laser beams in the two-dimensional directions on the horizontal direction plane along the surface of the table.

Furthermore, when the directions in which the laser beams have been transmitted are the horizontal directions, the directions of the rotation axes of the second mirrors may be set to be parallel to the transmission directions, allowing the spacing between the first mirrors and second mirrors to be made more compact.

In addition, for basic constructions (1), (2), (3) and (4), the sintered surfaces produced by the laser beams that have been transmitted through the plurality of the galvano scanners are mutually independent and in different regions, and therefore that makes it possible to employ embodiments that cannot be carried out in prior inventions 1 and 2.

For basic constructions (1), (2), (3) and (4), in particular, the spacing between the second mirrors can be made more compact and the outlines of the borders of the sintered surfaces can be made more distinct, while it is also possible to freely select the necessary sintered surface regions as in the Examples described below.

**Brief Explanation on Drawings**

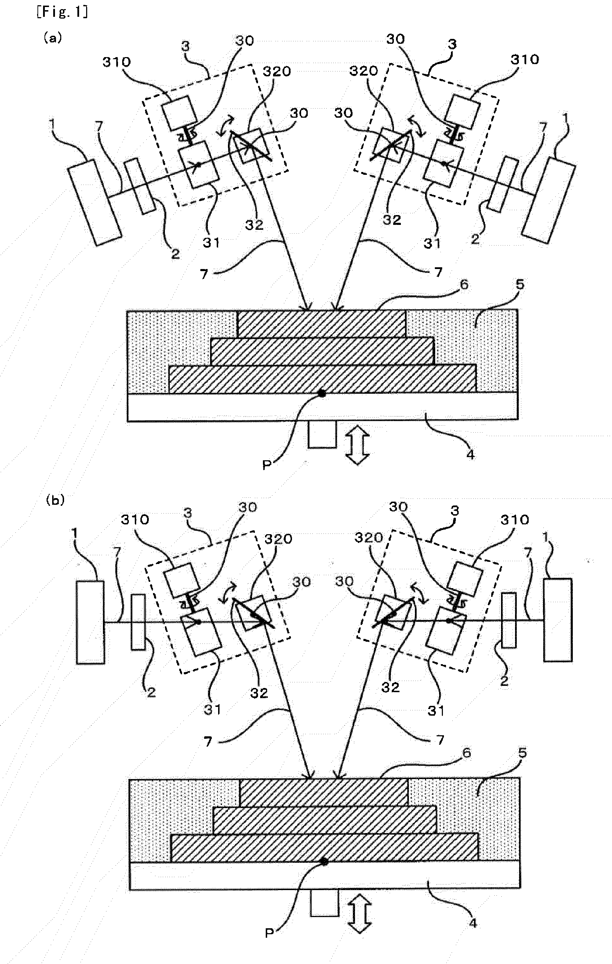

[Fig. 1]
This is a side view showing a three-dimensional shaping method of basic construction (1) and a three-dimensional shaping apparatus of basic construction (3) (representing a case employing two dynamic focus lenses and two galvano scanners), wherein a first mirror of each galvano scanner oscillates on a rotation axis in a direction slanted with respect to the surface of a table, wherein (a) shows a case in which laser beams that have been transmitted through dynamic focus lenses are in slanted directions with respect to the surface of the table, and (b) shows a case where the laser beams are in the same horizontal direction as the surface of the table, as in basic constructions (1) and (3). The laser beams that are transmitted through the dynamic focus lenses naturally include directions slanted or perpendicular to the plane of the page in Fig. 1(a) and (b), and assuming their inclusion, the dot symbols at the tips of the arrows indicating the traveling directions of the laser beams represent a reflection location.

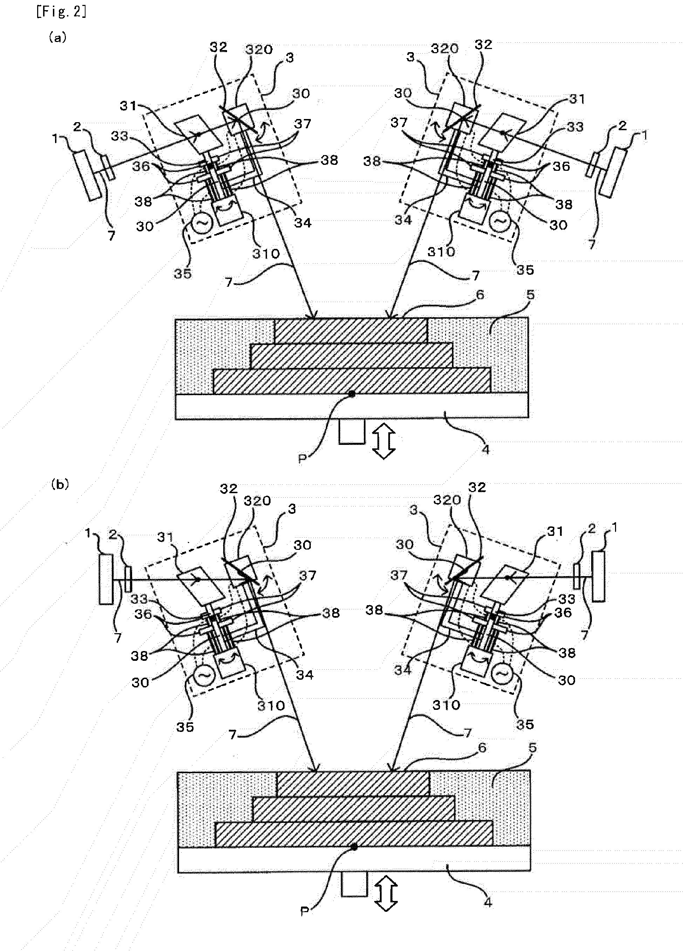

[Fig. 2]
This is a side view showing a three-dimensional shaping method of basic construction (2) and three-dimensional shaping apparatus of basic construction (4) (representing a case employing two dynamic focus lenses and two galvano scanners), wherein a first mirror of each galvano scanner oscillates on a rotation axis in a direction slanted with respect to the surface of a table, wherein (a) shows a case in which laser beams that have been transmitted through dynamic focus lenses are in slanted directions with respect to the surface of the table, and (b) shows a case where the laser beams are in the same horizontal direction as the surface of the table, as in basic constructions (2) and (4). The laser beams that are transmitted through the dynamic focus lenses naturally include directions slanted or perpendicular to the plane of the page in Fig. 2(a) and (b), and assuming their inclusion, the dot symbols at the tips of the arrows indicating the traveling directions of the laser beams represent the reflection location.

[Fig. 3]
This is a side view showing a three-dimensional shaping method and a three-dimensional shaping apparatus, which is not covered by the claims and wherein the first mirror of each galvano scanner oscillates on a rotation axis in the vertical direction perpendicular to the surface of the table (representing a case employing two dynamic focus lenses and two galvano scanners). The laser beams that are transmitted through the dynamic focus lenses naturally include directions slanted or perpendicular to the plane of the page in Fig. 3, and assuming their inclusion, the dot symbol at the tips of the arrows indicating the traveling directions of the laser beams represents the reflection location.

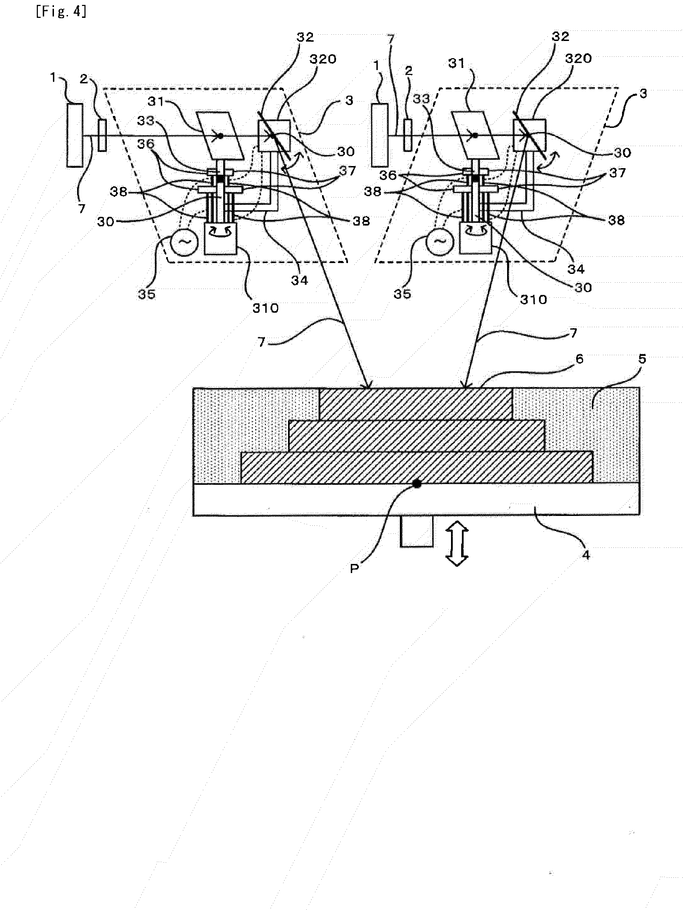

[Fig. 4]
This is a side view showing a three-dimensional shaping method and a three-dimensional shaping apparatus, which is not covered by the claims and wherein the first mirror of each galvano scanner oscillates on a rotation axis in the vertical direction perpendicular to the surface of the table (representing a case employing two dynamic focus lenses and two galvano scanners). Laser beams that are transmitted through the dynamic focus lenses naturally include directions slanted or perpendicular to the plane of the page in Fig. 4, and assuming their inclusion, the dot symbol at the tips of the arrows indicating the traveling directions of the laser beams represents the reflection location.

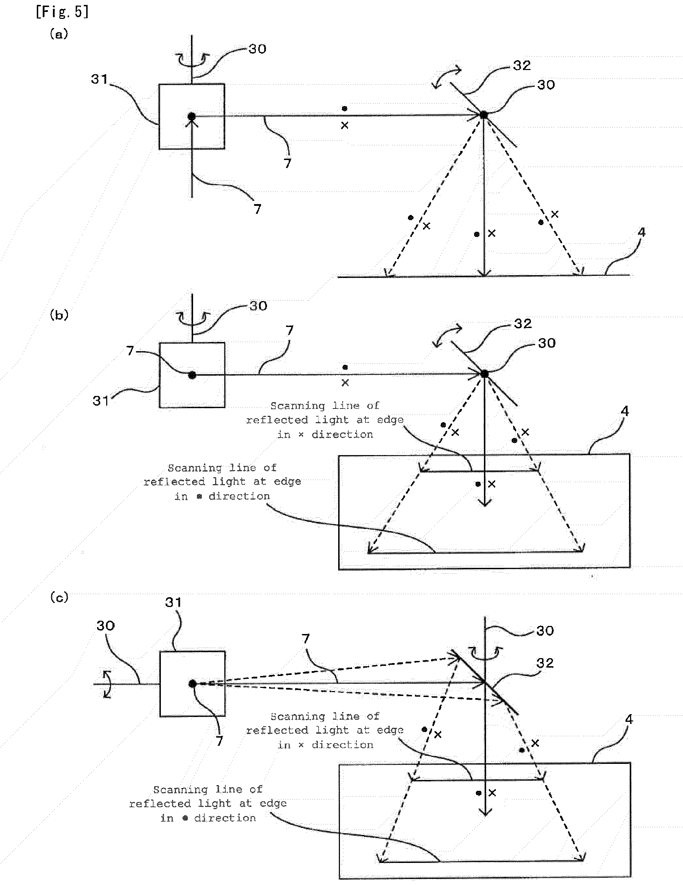

[Fig. 5]
This is a set of schematic views illustrating directions of the rotation axes on which a first mirror and a second mirror oscillate, for a case where laser beams that have been transmitted through dynamic focus lenses are slanted with respect to the horizontal direction in basic constructions (1), (2), (3) and (4), where (a) shows a case in which the direction of the rotation axis of the second mirror is in a horizontal direction (the rotation axis of the first mirror is perpendicular to the transmission direction, and not in the vertical direction), (b) shows a case in which the direction of the rotation axis of the second mirror is in the transmission direction (if the transmission direction that is slanted with respect to the surface of the table is set in the direction perpendicular to the plane of the page, the surface of the table that is slanted with respect to the transmission direction is represented not by a flat shape perpendicular to the plane of the page as in (a), but rather by a state that is slanted at a prescribed width in the direction on the plane of the page in the top-bottom direction, and (c) shows a case in which the rotation axis of the second mirror is perpendicular to both the direction of the rotation axis of the first mirror and the transmission direction (and similar to (b), if the transmission direction that is slanted with respect to the surface of the table is set in the direction perpendicular to the plane of the page, the surface of the table that is slanted with respect to the transmission direction is represented by the state that is slanted at a prescribed width in the direction on the plane of the page in the top-bottom direction, as shown in (c). Each dot symbol in Fig. 5 (a), (b) and (c) represents the direction from the back side toward the front side on the plane of the page, and the × symbol represents the direction from the front side toward the back side on the plane of the page.

[Fig. 6]

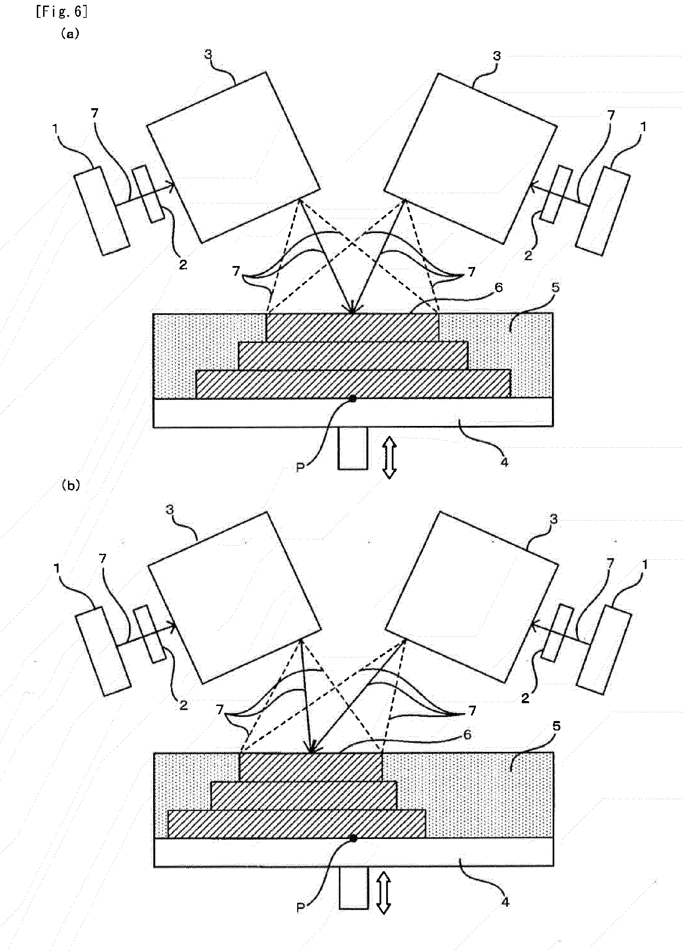

Fig. 6(a) shows a configuration in which, during oscillation of the second mirror of each galvano scanner, the irradiation positions match on the sintered surface for reflected light reflected at the stage where the center location of amplitude by oscillation is formed. Fig. 6(b) shows a configuration in which the irradiation positions match on the irradiated surface for reflected light reflected from a location not corresponding to the center location, for the oscillation of the second mirror of each galvano scanner.

[Fig. 7]

This shows a set of side views of the basic construction of (1), (2), (3) and (4), for an embodiment where the sintered surfaces by the laser beams that have been transmitted through the plurality of the galvano scanners are mutually independent and in different regions, with (a) showing a case in which the regions are adjacent, (b) showing a case in which the regions are mutually separated, and (c) showing a case in which the regions are overlapping at their mutual borders.

**Description of Embodiments for Executing the Invention**

The three-dimensional shaping method according to basic constructions (1) and (2) is based on the assumption of carrying out the processes of powder lamination on a table 4 by traveling of a squeegee, of sintering by irradiation of laser beams 7 onto a laminated powder layer 5 and of cutting of the sintered layer by traveling of the cutting tool, while the three-dimensional shaping apparatus according to basic constructions (3) and (4) is based on the assumption of including the squeegee that laminates powder on the table 4 as it travels, the sintering apparatus that irradiates the laser beams 7 onto the powder layer 5, and the cutting tool that cuts the sintered layer while traveling.

With these basic assumptions, the methods according to basic construction (1) and the apparatus according to basic constructions (3), as shown in Fig. 1(a) or Fig. 1(b), employ a plurality of galvano scanners 3 which carry out scanning in two-dimensional directions with reference to orthogonal coordinates of the laser beams 7, and during irradiation of the laser beams 7, which are oscillated by the laser beam oscillation sources 1, the laser beam 7 that has been transmitted through each dynamic focus lens 2 being reflected from a first mirror 31 that oscillates on a rotation axis 30 in the direction perpendicular to the transmission direction, and the second mirror 32 that is perpendicular to the direction of the rotation axis 30 of the first mirror 31, in a state independent from oscillation of the first mirror 31, and oscillates on the rotation axis 30 in a horizontal direction, however, according to the prior inventions 1 and 2, the direction of the rotation axis 30 on which the second mirror 32 oscillates is completely unclear among the constructions based on such employment.

The fact that the constructions of the inventions of prior inventions 1 and 2 are altogether insufficient will now be explained with reference to Fig. 5(a), (b) and (c).

If the direction of the rotation axis 30 of the first mirror 31 is perpendicular to the transmission direction of the laser beam 7, this means that oscillation on the rotation axis 30 allows the laser beam 7 to scan in the plane that includes the transmission direction, which is a naturally necessary condition in technical terms.

In order to carry out two-dimensional scanning in horizontal directions along the plane of the table 4 by scanning with the first mirror 31 and scanning with the second mirror 32, it is essential for the direction of the rotation axis 30 of the second mirror 32 to be perpendicular to the direction of the rotation axis 30 of the first mirror 31.

When scanning is carried out in two-dimensional directions through the first mirror 31 and the second mirror 32, the direction of the rotation axis 30 of the second mirror 32 with respect to the rotation axis 30 of the first mirror 31 that is perpendicular to the transmission direction of the laser beam 7 may be one of 3 cases: the horizontal direction as shown in Fig. 5(a), the transmission direction of the laser beam 7 as shown in Fig. 5(b), and the direction perpendicular not only to the direction of the rotation axis 30 of the first mirror 31 but also to the transmission direction of the laser beam 7 as shown in Fig. 5 (c) .

With the direction shown in Fig. 5(a), it is possible to carry out the uniform scanning along the horizontal direction which is along the surface of the table 4, with reflected light from the first mirror 31 along the plane that includes the transmission direction (reflected light scanning along the directions toward the front and the back on the plane of the page indicated by the dot symbols and × symbols), by oscillation on the rotation axis 30 of the second mirror 32 which is along the horizontal direction.

With the direction shown in Fig. 5(b), on the other hand, since the transmission direction of the laser beam 7 is slanted with respect to the surface of the table 4, the rotation axis 30 of the second mirror 32 is not in the horizontal direction.

Therefore, the distance from the horizontal plane along the surface of the table 4 differs depending on the location where the laser beam 7 is reflected from the second mirror 32, and therefore that makes it impossible to carry out uniform scanning along the horizontal plane.

More specifically, as shown in Fig. 5(b), since a scanning line of the laser beam 7 that has been reflected from the second mirror 32 at a location at an edge in the back side direction on the plane of the page represented by the × symbol, and the scanning line of the laser beam 7 that has been reflected from the second mirror 32 at the edge in the front side direction on the plane of the page represented by the dot symbol, differ by a distance with respect to the horizontal plane, and therefore the lengths of the respective scanning lines also necessarily differ.

Consequently, with reflection by the second mirror 32 shown in Fig. 5(b), it is not possible to carry out the uniform and accurate scanning in two-dimensional directions on the horizontal plane along the surface of the table 4.

In the case shown in Fig. 5(c) as well, since the direction of the rotation axis 30 of the second mirror 32 is not in the horizontal direction as shown in Fig. 5(a), the distance with respect to the horizontal plane differs depending on the location where the laser beam 7 reflected by the first mirror 31 is reflected by the second mirror 32, and as shown in Fig. 5(c), the lengths of the scanning lines of the laser beam 7 reflected by the second mirror 32 at the locations on both the front side and the back side edges on the plane of the page also differ, likewise making it impossible to carry out the uniform and the accurate scanning in two-dimensional directions on the horizontal plane along the surface of the table 4.

However, while prior inventions 1 and 2 include cases where the laser beam 7 that has been transmitted through the dynamic focus lens 2 is slanted with respect to the horizontal direction, the direction of the rotation axis 30 of the second mirror 32 is left completely unspecified, and therefore the direction of the rotation axis 30 of the second mirror 32 is undefined and it is completely unclear which of Fig. 5(a), (b), (c) was employed.

In such a case, in Fig. 3 of prior inventions 1 and 2, it appears that the laser beam 7 reflected from the first mirror 31 is scanned in a left-right direction on the plane of the page, and that since the scanning in the left-right direction can be carried out when the direction of the rotation axis 30 of the second mirror 32 is as shown in any of Fig. 5(a), (b) or (c), the construction of any of Fig. 5(a), (b), (c) must be also included.

Therefore, the methods of basic construction (1) and the apparatus of basic construction (3) specify the direction of the rotation axis 30 of the second mirror 32 to be the horizontal direction, and thus they provide a clear advantage of technical content compared to prior inventions 1 and 2, in terms of allowing the uniform and accurate two-dimensional scanning to be carried out in the horizontal direction.

With these basic assumptions, the methods according to basic construction (2) and the apparatus according to basic construction (4), as shown in Fig. 2 , employ the plurality of the galvano scanners 3 which carry out scanning in two-dimensional directions with reference to cylindrical coordinates of the laser beams 7 that are oscillated by the laser beam oscillation sources 1 and have been transmitted through dynamic focus lenses 2, and during irradiation of the laser beams 7, the laser beams 7 are reflected from the first mirrors 31 that oscillate on the rotation axes 30 in the direction perpendicular to the transmission direction, and the second mirrors 32 that oscillate in unison with them at equidistant locations on the periphery of the rotation axes 30 by being connected to the rotation axes 30 of the first mirrors 31 through arms 34, and that oscillate on the rotation axes 30 in the directions perpendicular to the directions of the rotation axes 30 of the first mirrors 31, and this system differs from prior inventions 1 and 2 which are based on scanning of the laser beams 7 in two-dimensional directions with reference to the orthogonal coordinates.

The directions of the rotation axes 30 of the first mirrors 31 and the second mirrors 32 in the methods of basic construction (2) and the apparatus of basic construction (4) are the same as those in the method of basic construction (1) and the apparatus of basic construction (3), and therefore as shown in Fig. 5 (a), it is possible to carry out the uniform two-dimensional scanning on the horizontal direction plane along the surface of the table 4.

As shown in Fig. 2(a) and (b), the state in which the oscillation of each first mirror 31 is carried out on the rotation axis 30 in the direction perpendicular to the direction of transmission of the dynamic focus lens 2 is achieved by an oscillation drive unit 310 that drives rotation on the rotation axis 30, similar to the method of basic construction (1) and the apparatuses of basic construction(3), and the state in which it is carried out on the rotation axis 30 of the second mirror 32 in the direction perpendicular to the rotation axis 30 of the first mirror 31 is achieved by an oscillation drive unit 320 that drives the rotation on the rotation axis 30.

In the scanning of the laser beams 7 in two-dimensional directions with reference to the cylindrical coordinates, scanning along the angular direction (θ direction) is carried out by the oscillation of the first mirror 31, and scanning along the radial direction (r direction) is carried out by the oscillation of the second mirror 32.

The second mirror 32, in the method of basic construction (2) and the apparatus of basic construction (4), oscillates in unison with the first mirror 31, and it therefore differs from basic constructions (1) and (3) in that the oscillation is not independent.

Explaining a reason why oscillation in unison is necessary, that is because the relationship:

$$x = r\cos\theta,$$

$$y = r\sin\theta$$

exists between the orthogonal coordinates (x, y) and the cylindrical coordinates (r, θ), and even though r is an independent parameter, it is able to be independent while corresponding to the independent parameter x, y by cooperation with, in other words, unit state with the independent parameter θ.

Such oscillation of the second mirror 32 can usually be carried out because the oscillation drive unit 320 is connected with the oscillation drive unit 310 as shown in Fig. 2 (a), (b) and Fig. 4, and is supported by an arm 34 extending from an oscillation support column 33 that supports the first mirror 31 and produces oscillation by rotation.

The construction for application of voltage and conduction of current to the oscillation drive unit 320 as required to activate the oscillation drive unit 320 with the state that the oscillation drive unit 320 is supported by the arm 34 is a matter of design by a person skilled in the art.

However, in conduction regions on both sides of a oscillation support strut 33 in the lengthwise direction divided by insulating portions of the oscillation support strut 33, as shown by the thin dotted lines in Fig. 2(a), (b) and Fig. 4, this is achieved by two rotating rings 36 disposed on a power source 35 side and two conductive rotating rings 37 disposed on the oscillation drive unit 320 side (a total of 4 rotating rings 36, 37), as well as conductive struts 38 supporting the respective rotating rings 36, 37 in a freely rotatable manner and anchored at prescribed locations (in Fig. 2 and Fig. 4, each of the struts 38 is independently anchored to the oscillation drive unit 310).

The method of basic construction (1) and the apparatus of basic construction (3) are suitable for rectangular three-dimensional shaping, while the method of basic construction (2) and the apparatus of basic construction (4) are suitable for three-dimensional shaping of curved outer peripheral surfaces such as those with circular or ellipsoid shapes.

Each of the methods of basic constructions (1) and (2) and each of the apparatuses of basic constructions (3) and (4) can be applied for polygonal three-dimensional shaping.

In basic constructions (7) and (8), as shown in Fig. 1(a), (b) and Fig. 2 (a), (b), the first mirror 31 of each galvano scanner 3 oscillates on the rotation axis 30 in a direction slanted with respect to the surface of the table 4.

That is, basic construction (7) and (8) has a compact design in the top-bottom direction, since the rotation axis 30 of the first mirror 31 is set in a direction that is slanted with respect to the surface of the table 4.

According to state that the direction in which the laser beam 7 has been transmitted through the dynamic focus lens 2 is also set to be slanted with respect to the surface of the table 4 in basic constructions (7) and (8) as shown in Fig. 1(a) and Fig. 2(a), more compact design in the top-bottom direction may be promoted.

However, the direction of the laser beam 7 does not need to be slanted with respect to the surface of the table 4.

For basic constructions (7) and (8), as shown in Fig. 1(b) and Fig. 2(b), a construction according to basic constructions (1), (2), (3) and (4) may be employed, in which the laser beam 7 that has been transmitted through the dynamic focus lens 2 is in a horizontal direction and the rotation axis 30 of the first mirror 31 is perpendicular to the direction of the laser beam 7.

As shown in Figs. 1(a), 1(b), 2(a) and 2(b), the rotation axis 30 of each first mirror 31 is slanted with respect to the surface of the table 4 to allow a compact design in the top-bottom direction, while it is also possible to employ a simple design in which the direction of the laser beam 7 oscillating from a laser beam oscillation source 1 and being transmitted through the dynamic focus lens 2 is the horizontal direction.

Moreover, for basic constructions (1), (2), (3) and (4), the direction of the rotation axis 30 of the second mirror 32 that is perpendicular to the direction of the rotation axis 30 of the first mirror 31 and in a horizontal direction is selected to be the direction of the rotation axis 30 parallel to the transmission direction of the laser beam 7, thus allowing a more compact state for the space between the first mirror 31 and the second mirror 32.

As shown in Figs. 3 and 4, the first mirror 31 of each galvano scanner 3 is oscillating on the rotation axis 30 in the vertical direction that is perpendicular to the surface of the table 4.

That is, similar to a conventional galvano scanner 3, oscillation of the first mirror 31 is with reference to the horizontal direction and the oscillation of the second mirror 32 is with reference to the vertical direction, thus allowing stable operation to be achieved.

Furthermore, since the direction of the rotation axis 30 of the first mirror 31 is vertical in basic constructions (5) and (6), the direction of the rotation axis 30 of the second mirror 32 may be selected to be any horizontal direction across 360° perpendicular to the direction of the rotation axis 30 of the first mirror 31, and it may also be selected to be any horizontal direction that is parallel to the direction of the laser beam 7 that has been transmitted through the dynamic focus lens 2.

In basic constructions (1), (2), (3) and (4), typical examples of the oscillation direction of the first mirror 31 and the oscillation direction of the second mirror 32 are constructions, in which the first mirror 31 of each galvano scanner oscillates on a rotation axis in a direction slanted with respect to the surface of a table (basic constructions (7) and (8)), and for example, considering that it is possible to have construction in which the oscillation of the first mirror 31 is along the vertical direction plane and the oscillation direction of the second mirror 32 is along the horizontal direction plane, the basic constructions (1), (2), (3) and (4) are not limited only to the construction according to basic construction (7) or (8).

In the configurations illustrated in Figs. 6a and 6b , wherein the oscillation range of the first mirror 31 and the oscillation range of the second mirror 32 are freely adjustable, the regions selected in a freely adjustable manner as sintered surfaces 6 produced by irradiation of the laser beams 7 transmitted through the plurality of the galvano scanners 3 will match, however, it will be possible to employ an embodiment in which irradiation positions match on the sintered surface 6 for reflected light reflected at the stage where the center location of amplitude by oscillation is formed during oscillation of the second mirror 32 of each galvano scanner 3 as shown in Fig. 6(a), and an embodiment in which the irradiation positions match on the sintered surface 6 for reflected light reflected from locations that do not correspond to the center location of amplitude by oscillation during oscillation of the second mirror 32 of each galvano scanner 3 as shown in Fig. 6(b).

When the regions of the sintered surface 6 produced by irradiation of the laser beams 7 from each of the galvano scanners 3 match as shown in Fig. 6(a) and (b), the sintered surfaces 6 are rapidly formed by superimposed sintering, thus more efficient three-dimensional shaping may be promoted.

In the case of the embodiment illustrated in Fig. 6(a), the amplitudes on both sides of the center location of the oscillation of the second mirror 32 can be adjusted to allow free selection of regions on the sintered surface 6 with respect to a center location P in the horizontal direction of the table 4.

In the case of the embodiment illustrated in Fig. 6(b), on the other hand, it is possible at any time to select a region of the sintered surface 6 at an arbitrary location separated from the center location P in the horizontal direction of the table 4.

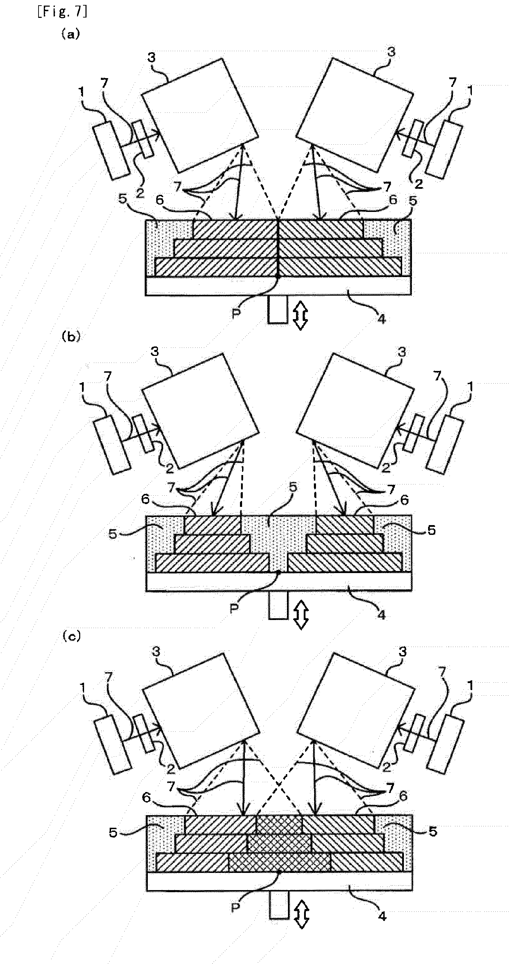

With basic constructions (1), (2), (3) and (4), free adjustment of the oscillation range of each first mirror 31 and the oscillation range of each second mirror 32 allows an embodiment to be employed in which the sintered surfaces 6 formed by the laser beams 7 transmitted through the plurality of the galvano scanners 3 are mutually independent and in different regions, and such an embodiment may also be an embodiment in which the regions are adjacent as shown in Fig. 7(a), an embodiment in which the regions are mutually separate as shown in Fig. 7(b), or an embodiment in which the regions are overlapping at their borders as shown in Fig. 7(c) .

There exist a large variety of forms of the sintered surfaces 6 that are mutually independent and form different regions, and application to the sintered surfaces 6 of such different forms by irradiation of the laser beams 7 from the plurality of the galvano scanners 3 is possible because the regions of the sintered surfaces 6 are freely selectable in each basic construction.

With the embodiments illustrated in Fig. 7(a), (b) and (c), it is possible to carry out efficient three-dimensional shaping since the sintered surfaces 6 that are mutually independent and in different regions are simultaneously and together by irradiation from the plurality of the galvano scanners 3.

With basic constructions (1), (2), (3) and (4), as shown in Fig. 1(a), (b) and Fig. 2(a), (b), each of the second mirrors 32 is disposed further on the inner side than each of the first mirrors 31 with respect to the center location P of the surface of the table 4.

With such placement, the spacing between each of the second mirrors 32 is more compact, and as a result, a problem occurs in that the brightness is lower at the outlines of the borders of the sintered surfaces 6, where the laser beams 7 reflected from each of the second mirrors 32 exceed the center location P to form the sintered surfaces 6, as the sintered surface 6 is more distant from the center location, in contrast to the opposite placement from the placement described above, i.e. where each of the second mirrors 32 is disposed further on the outer side with respect to the center location P than each of the first mirrors 31, while in the case of irradiation of the surface of the table 4 in the vertical direction, approximately ellipsoid sintered surfaces 6 are formed instead of forming approximately circular sintered surfaces 6, leading to less of a problem of shape inaccuracy of the sintered surfaces 6, and therefore production of a more distinct condition is possible.

As a reference example for basic constructions (1), (2), (3) and (4), it is possible to employ a construction such as shown in Figs. 3 and 4, where one of the first mirrors 31 is disposed further on the outer side than one of the second mirrors 32 with respect to the center location P of the surface of the table 4, while the other of the first mirrors 31 is disposed further on the inner side than the other of the second mirrors 32.

In this reference example as well, it is possible to avoid the problem that occurs when each of the first mirrors 31 is disposed further on the inner side than each of the second mirrors 32.

However, the problem is only avoided to half the degree compared to the embodiment in which each of the first mirrors 31 is disposed further on the outer side than each of the second mirrors 32, as shown in Fig. 1(a), (b) and Fig. 2(a), (b).

An example of the invention will now be described.

**Example**

As shown in Fig. 1(a), (b), Fig. 2(a), (b), Fig. 3 and Fig. 4, in the Example (the arrangements of Fig. 3 and 4, however, are not covered by the claims), reflected light reflected at the stage where the center location of amplitude by oscillation is formed is in a slanted direction with respect to the surface of the table 4 during oscillation of the second mirror 32 of each galvano scanner 3.

According to such a feature, the Example lowers the location of each galvano scanner 3 in the vertical direction (height direction) compared to the case when the laser beams 7 are perpendicular to the surface of the table 4, while free adjustment of each oscillation range for the first mirror 31 and second mirror 32 allows free selection of the necessary region of the sintered surface 6 on the surface of the table 4.

This does not mean, however, that the embodiment where the laser beams 7 are perpendicular to the surface of the table 4 is necessarily excluded when the Example is implemented.

**Industrial Applicability**

The present invention is innovative in terms of carrying out efficient three-dimensional shaping, and it has a wide range of application.

**Reference Signs List**

    1: Laser beam oscillation source
    2: Dynamic focus lens
    3: Galvano scanner
    30: Rotation axis
    31: First mirror
    32: Second mirror
    310: Oscillation drive unit for first mirror
    320: Oscillation drive unit for second mirror
    33: Rotatable oscillation support strut
    34: Arm
    35: Power source
    36: Rotating ring on power source side
    37: Rotating ring on oscillation drive unit side for second mirror
    38: Conductive strut supporting rotating ring
    4: Table
    5: Powder layer
    6: Sintered surface
    7: Laser beam
    P: Center location of surface of table
    Q, Q': Line symmetry reference position for placement in opposite directions at prescribed distance with respect to P

**Claims**

1. A three-dimensional shaping method comprising the processes of laminating powder on a table (4) by traveling of a squeegee, sintering a laminated powder layer (5) by irradiation of laser beams (7), and cutting a sintered layer by traveling of a cutting tool, wherein during the irradiation, a plurality of galvano scanners (3) are employed that carry out scanning in two-dimensional directions based on orthogonal coordinates of the laser beams (7) that have been transmitted through dynamic focus lenses (2) by reflection of the laser beams (7) from first mirrors (31) that oscillate on rotation axes (30) in directions perpendicular to the transmission direction and second mirrors (32) that are perpendicular to the directions of the rotation axes (30) of the first mirrors (31) in an independent state from oscillation of the first mirrors (31) and that oscillate on rotation axes (30) in horizontal directions, and regions of sintered surface (6) produced by the irradiation of the laser beams (7) that have been transmitted through each galvano scanner (3) are freely selectable by free adjustment of oscillation range of each first mirror (31) and second mirror (32), and the laser beams (7) are irradiated on the sintered surface (6) at focus location or its vicinity by adjustment of the focal lengths of the dynamic focus lenses (2), **characterised in that** each first mirror (31) is disposed on an outer side from each second mirror (32) with reference to a center location (P) of a surface of the table (4).

2. A three-dimensional shaping method comprising the processes of laminating powder on a table (4) by traveling of a squeegee, sintering a laminated powder layer (5) by irradiation of laser beams (7), and cutting a sintered layer by traveling of a cutting tool, wherein during the irradiation, a plurality of galvano scanners (3) are employed that carry out scanning in two-dimensional directions based on cylindrical coordinates of the laser beams (7) that have been transmitted through dynamic focus lenses (2) by reflection of the laser beams (7) from first mirrors (31) that oscillate on rotation axes (30) in directions perpendicular to the transmission direction and second mirrors (32) that oscillate in unison with them at equidistant locations on periphery of the rotation axes (30) by being connected to the rotation axes (30) of the first mirrors (31) through arms (34) that are perpendicular to the directions of the rotation axes (30) of the first mirrors (31) and moreover that oscillate on rotation axes (30) in horizontal directions, and regions of sintered surface (6) produced by the irradiation of the laser beams (7) that have been transmitted through each galvano scanner (3) are freely selectable by free adjustment of oscillation range of each first mirror (31) and oscillation range of each second mirror (32), and the laser beams (7) are irradiated on the sintered surface (6) at focus location or its vicinity by adjustment of the focal lengths of the dynamic focus lenses (2), and each first mirror (31) is disposed on an outer side from each second mirror (32) with reference to a center location (P) of a surface of the table (4).

3. A three-dimensional shaping apparatus comprising a squeegee that laminates powder on a table (4) by traveling over it, a sintering apparatus that irradiates a powder layer (5) with laser beams (7), and a cutting tool that cuts a sintered layer while traveling, wherein during the irradiation, a plurality of galvano scanners (3) are employed that carry out scanning in two-dimensional directions based on orthogonal coordinates of the laser beams (7) that have been transmitted through dynamic focus lenses (2) by reflection of the laser beams (7) from first mirrors (31) that oscillate on rotation axes (30) in directions perpendicular to the transmission direction and second mirrors (32) that are perpendicular to the directions of the rotation axes (30) of the first mirrors (31) in an independent state from oscillation of the first mirrors (31) and that oscillate on the rotation axes (30) in horizontal directions, and controllers allowing free adjustment of oscillation ranges of oscillation drive unit (310) for each first mirror (31) and oscillation drive unit (320) for each second mirror (32) are provided to allow free selection of regions of sintered surface (6) produced by the irradiation of the laser beams (6), and the laser beams (7) are irradiated on the sintered surface (6) at focus location or its vicinity by adjustment of the focal lengths of the dynamic focus lenses (2), **characterised in that** each first mirror (31) is disposed on an outer side from each second mirror (32) with reference to a center location (P) of a surface of the table (4).

4. A three-dimensional shaping apparatus comprising a squeegee that laminates powder on a table (4) by traveling over it, a sintering apparatus that irradiates a powder layer (5) with laser beams (7), and a cutting tool that cuts a sintered layer while traveling, wherein during the irradiation, a plurality of galvano scanners (3) are employed that carry out scanning in two-dimensional directions based on cylindrical coordinates of the laser beams (7) that have been transmitted through dynamic focus lenses (2) by reflection of the laser beams (7) from first mirrors (31) that oscillate on rotation axes (7) in directions perpendicular to the transmission direction and second mirrors (32) that oscillate in unison with them at equidistant locations on periphery of the rotation axes (30) by being connected to the rotation axes (30) of the first mirrors (31) through arms (34) that are perpendicular to the directions of the rotation axes (30) of the first mirrors (31) and moreover that oscillate on the rotation axes (30) in horizontal directions, and controllers allowing free adjustment of oscillation range of oscillation drive unit (310) for each first mirror (31) and oscillation range of oscillation drive unit (320) for each second mirror (32) are provided to allow free selection of regions of sintered surface (6) produced by the irradiation of the laser beams (7), and the laser beams (7) are irradiated on the sintered surface (6) at focus location or its vicinity by adjustment of the focal lengths of the dynamic focus lenses (2), and each first mirror (31) is disposed on an outer side from each second mirror (32) with reference to a center location (P) of a surface of the table (4).

5. The three-dimensional shaping method according to any one of claims 1 or 2, wherein the first mirror (31) of each galvano scanner (3) oscillates on a rotation axis (30) in the vertical direction perpendicular to the surface of the table (4) .

6. The three-dimensional shaping apparatus according to any one of claims 3 or 4, wherein the first mirror (31) of each galvano scanner (3) oscillates on a rotation axis (30) in the vertical direction perpendicular to the surface of the table (4).

7. The three-dimensional shaping method according to any one of claims 1 or 2, wherein the first mirror (31) of each galvano scanner (3) oscillates on a rotation axis (30) in a slanted direction with respect to the surface of the table (4).

8. The three-dimensional shaping apparatus according to any one of claims 3 or 4, wherein the first mirror (31) of each galvano scanner (3) oscillates on a rotation axis (30) in a slanted direction with respect to the surface of the table (4) .

9. The three-dimensional shaping method according to any one of claims 1 or 2, wherein, during oscillation of the second mirror (32) of each galvano scanner (3), light reflected at the stage of forming the center location (P) of amplitude by oscillation is in a slanted direction with respect to the surface of the table (4).

10. The three-dimensional shaping apparatus according to any one of claims 3 or 4, wherein, during oscillation of the second mirror (32) of each galvano scanner (3), light reflected at the stage of forming the center location (P) of amplitude by oscillation is in a slanted direction with respect to the surface of the table (4).

**Patentansprüche**

1. Verfahren zur dreidimensionalen Formung umfassend die Prozesse eines Laminierens von Pulver an einem Tisch (4) durch Bewegen einer Rakel, eines Sinterns einer laminierten Pulverschicht (5) durch Einstrahlung von Laserstrahlen (7), und eines Schneidens einer gesinterten Schicht durch Bewegen eines Schneidwerkzeugs, wobei während der Einstrahlung eine Vielzahl von Galvano-Scannern (3) eingesetzt werden, die ein Scannen in zweidimensionalen Richtungen basierend auf orthogonalen Koordinaten der Laserstrahlen (7) durchführen, die durch dynamische Fokallinsen (2) hindurch durch Reflexion der Laserstrahlen (7) von ersten Spiegeln (31), die an Drehachsen (30) in Richtungen senkrecht zur Übertragungsrichtung oszillieren, und zweiten Spiegeln (32), die senkrecht zu den Richtungen der Drehachsen (30) der ersten Spiegel (31) in einem unabhängigen Zustand von der Oszillation der ersten Spiegel (31) sind und die an Drehachsen (30) in horizontalen Richtungen oszillieren, übertragen worden sind, und Bereiche einer gesinterten Oberfläche (6), die durch die Einstrahlung der Laserstrahlen (7) erzeugt werden, die durch jeden Galvano-Scanner (3) übertragen worden sind, durch freie Einstellung eines Oszillationsbereichs jedes ersten Spiegels (31) und zweiten Spiegels (32) frei auswählbar sind, und die Laserstrahlen (7) auf die gesinterte Oberfläche (6) durch Einstellung der Fokallängen der dynamischen Fokuslinsen (2) am Fokalpunkt oder in seiner Nachbarschaft eingestrahlt werden, **dadurch gekennzeichnet, dass** jeder erste Spiegel (31) mit Bezug auf einen zentralen Ort (P) einer Oberfläche des Tisches (4) an einer Außenseite von jedem zweiten Spiegel (32) angeordnet ist.

2. Verfahren zur dreidimensionalen Formung umfassend die Prozesse eines Laminierens von Pulver an einem Tisch (4) durch Bewegen einer Rakel, eines Sinterns einer laminierten Pulverschicht (5) durch Einstrahlung von Laserstrahlen (7), und eines Schneidens einer gesinterten Schicht durch Bewegen eines Schneidwerkzeugs, wobei während der Einstrahlung eine Vielzahl von Galvano-Scannern (3) eingesetzt werden, die ein Scannen in zweidimensionalen Richtungen basierend auf zylindrischen Koordinaten der Laserstrahlen (7) durchführen, die durch dynamische Fokallinsen (2) hindurch durch Reflexion der Laserstrahlen (7) von ersten Spiegeln (31), die an Drehachsen (30) in Richtungen senkrecht zur Übertragungsrichtung oszillieren, und zweiten Spiegeln (32), die im Einklang mit ihnen an äquidistanten Orten am Umfang der Drehachsen (30) oszillieren, indem sie mit den Drehachsen (30) der ersten Spiegel (31) durch Arme (34) verbunden sind, die senkrecht zu den Richtungen der Drehachsen (30) der ersten Spiegel (31) sind, und die außerdem an Drehachsen (30) in horizontalen Richtungen oszillieren, übertragen worden sind, und Bereiche einer gesinterten Oberfläche (6), die durch die Einstrahlung der Laserstrahlen (7) erzeugt werden, die durch jeden Galvano-Scanner (3) übertragen worden sind, durch freie Einstellung eines Oszillationsbereichs jedes ersten Spiegels (31) und eines Oszillationsbereichs jedes zweiten Spiegels (32) frei auswählbar sind, und die Laserstrahlen (7) auf die gesinterte Oberfläche (6) durch Einstellung der Fokallängen der dynamischen Fokuslinsen (2) am Fokalpunkt oder in seiner Nachbarschaft eingestrahlt werden, und jeder erste Spiegel (31) mit Bezug auf einen zentralen Ort (P) einer Oberfläche des Tisches (4) an einer Außenseite von jedem zweiten Spiegel (32) angeordnet ist.

3. Vorrichtung zur dreidimensionalen Formung umfassend eine Rakel, die Pulver an einem Tisch (4) laminiert, indem sie sich über dieses bewegt, eine Sintervorrichtung, die eine Pulverschicht (5) mit Laserstrahlen (7) bestrahlt, und ein Schneidwerkzeug, das eine gesinterte Schicht schneidet, während es sich bewegt, wobei während der Einstrahlung eine Vielzahl von Galvano-Scannern (3) eingesetzt werden, die ein Scannen in zweidimensionalen Richtungen basierend auf orthogonalen Koordinaten der Laserstrahlen (7) durchführen, die durch dynamische Fokallinsen (2) hindurch durch Reflexion der Laserstrahlen (7) von ersten Spiegeln (31), die an Drehachsen (30) in Richtungen senkrecht zur Übertragungsrichtung oszillieren, und zweiten Spiegeln (32), die senkrecht zu den Richtungen der Drehachsen (30) der ersten Spiegel (31) in einem unabhängigen Zustand von der Oszillation der ersten Spiegel (31) sind und die an den Drehachsen (30) in horizontalen Richtungen oszillieren, übertragen worden sind, und Steuereinrichtungen, die eine freie Einstellung von Oszillationsbereichen einer Oszillationsantriebseinheit (310) für jeden ersten Spiegel (31) und Oszillationsantriebseinheit (320) für jeden zweiten Spiegel (32) erlauben, vorgesehen sind, um eine freie Auswahl von Bereichen einer durch die Einstrahlung der Laserstrahlen (7) erzeugten gesinterten Oberfläche (6) zu erlauben, und die Laserstrahlen (7) auf die gesinterte Oberfläche (6) durch Einstellung der Fokallängen der dynamischen Fokuslinsen (2) am Fokalpunkt oder in seiner Nachbarschaft eingestrahlt werden, **dadurch gekennzeichnet, dass** jeder erste Spiegel (31) mit Bezug auf einen zentralen Ort (P) einer Oberfläche des Tisches (4) an einer Außenseite von jedem zweiten Spiegel (32) angeordnet ist.

4. Vorrichtung zur dreidimensionalen Formung umfassend eine Rakel, die Pulver an einem Tisch (4) laminiert, indem sie sich über dieses bewegt, eine Sintervorrichtung, die eine Pulverschicht (5) mit Laserstrahlen (7) bestrahlt, und ein Schneidwerkzeug, das eine gesinterte Schicht schneidet, während es sich bewegt, wobei während der Einstrahlung eine Vielzahl von Galvano-Scannern (3) eingesetzt werden, die ein Scannen in zweidimensionalen Richtungen basierend auf zylindrischen Koordinaten der Laserstrahlen (7) durchführen, die durch dynamische Fokallinsen (2) hindurch durch Reflexion der Laserstrahlen (7) von ersten Spiegeln (31), die an Drehachsen (7) in Richtungen senkrecht zur Übertragungsrichtung oszillieren, und zweiten Spiegeln (32), die im Einklang mit ihnen an äquidistanten Orten am Umfang der Drehachsen (30) oszillieren, indem sie mit den Drehachsen (30) der ersten Spiegel (31) durch Arme (34) verbunden sind, die senkrecht zu den Richtungen der Drehachsen (30) der ersten Spiegel (31) sind, und die außerdem an den Drehachsen (30) in horizontalen Richtungen oszillieren, übertragen worden sind, und Steuereinrichtungen, die eine freie Einstellung eines Oszillationsbereichs einer Oszillationsantriebseinheit (310) für jeden ersten Spiegel (31) und eines Oszillationsbereichs einer Oszillationsantriebseinheit (320) für jeden zweiten Spiegel (32) erlauben, vorgesehen sind, um eine freie Auswahl von Bereichen einer durch die Einstrahlung der Laserstrahlen (7) erzeugten gesinterten Oberfläche (6) zu erlauben, und die Laserstrahlen (7) auf die gesinterte Oberfläche (6) durch Einstellung der Fokallängen der dynamischen Fokuslinsen (2) am Fokalpunkt oder in seiner Nachbarschaft eingestrahlt werden, und jeder erste Spiegel (31) mit Bezug auf einen zentralen Ort (P) einer Oberfläche des Tisches (4) an einer Außenseite von jedem zweiten Spiegel (32) angeordnet ist.

5. Verfahren zur dreidimensionalen Formung nach einem der Ansprüche 1 oder 2, wobei der erste Spiegel (31) jedes Galvano-Scanners (3) an einer Drehachse (30) in der vertikalen Richtung senkrecht zur Oberfläche des Tisches (4) oszilliert.

6. Vorrichtung zur dreidimensionalen Formung nach einem der Ansprüche 3 oder 4, wobei der erste Spiegel (31) jedes Galvano-Scanners (3) an einer Drehachse (30) in der vertikalen Richtung senkrecht zur Oberfläche des Tisches (4) oszilliert.

7. Verfahren zur dreidimensionalen Formung nach einem der Ansprüche 1 oder 2, wobei der erste Spiegel (31) jedes Galvano-Scanners (3) an einer Drehachse (30) in einer schrägen Rchtung in Bezug auf die Oberfläche des Tisches (4) oszilliert.

8. Vorrichtung zur dreidimensionalen Formung nach einem der Ansprüche 3 oder 4, wobei der erste Spiegel (31) jedes Galvano-Scanners (3) an einer Drehachse (30) in einer schrägen Rchtung in Bezug auf die Oberfläche des Tisches (4) oszilliert.

9. Verfahren zur dreidimensionalen Formung nach einem der Ansprüche 1 oder 2, wobei, während einer Oszillation des zweiten Spiegels (32) jedes Galvano-Scanners (3), Licht, das in dem Stadium eines Bildens des zentralen Orts (P) einer Amplitude durch Oszillation reflektiert wird, in einer schrägen Richtung in Bezug auf die Oberfläche des Tisches (4) ist.

10. Vorrichtung zur dreidimensionalen Formung nach einem der Ansprüche 3 oder 4, wobei, während einer Oszillation des zweiten Spiegels (32) jedes Galvano-Scanners (3), Licht, das in dem Stadium eines Bildens des zentralen Orts (P) einer Amplitude durch Oszillation reflektiert wird, in einer schrägen Richtung in Bezug auf die Oberfläche des Tisches (4) ist.

## Revendications

1. Procédé de façonnage tridimensionnel comprenant les procédés de stratification de poudre sur une table (4) par déplacement d'un racleur, frittage d'une couche de poudre (5) stratifiée par irradiation de faisceaux laser (7), et coupe d'une couche frittée par déplacement d'un outil de coupe, selon lequel, durant l'irradiation, une pluralité de galvano scanners (3) sont utilisés pour exécuter un balayage dans des sens bidimensionnels sur la base de coordonnées orthogonales des faisceaux laser (7) qui ont été transmis à travers des lentilles à focalisation dynamique (2) par réflexion des faisceaux laser (7) depuis de premiers miroirs (31) qui oscillent sur des axes de rotation (30) dans des sens perpendiculaires au sens de transmission et de seconds miroirs (32) qui sont perpendiculaires aux sens des axes de rotation (30) des premiers miroirs (31) sous un état indépendant depuis l'oscillation des premiers miroirs (31) et qui oscillent sur des axes de rotation (30) dans des sens horizontaux, et des régions de surface frittée (6) produites par l'irradiation des faisceaux laser (7) qui ont été transmis à travers chaque galvano scanner (3) pouvant être librement sélectionné par l'ajustement libre d'une plage d'oscillations de chaque premier miroir (31) et second miroir (32), et les faisceaux laser (7) sont irradiés sur la surface frittée (6) à une localisation de focalisation ou son voisinage par un ajustement des distances focales des lentilles à focalisation dynamique (2), **caractérisé en ce que** chaque premier miroir (31) est disposé sur un côté externe depuis chaque second miroir (32) en référence à une localisation centrale (P) d'une surface de la table (4).

2. Procédé de façonnage tridimensionnel comprenant les procédés de stratification de poudre sur une table (4) par déplacement d'un racleur, frittage d'une couche de poudre (5) stratifiée par irradiation de faisceaux laser (7), et coupe d'une couche frittée par déplacement d'un outil de coupe, selon lequel, durant l'irradiation, une pluralité des galvano scanners (3) sont utilisés pour exécuter un balayage dans des sens bidimensionnels sur la base de coordonnées cylindriques des faisceaux laser (7) qui ont été transmis à travers des lentilles à focalisation dynamique (2) par réflexion des faisceaux laser (7) depuis de premiers miroirs (31) qui oscillent sur des axes de rotation (30) dans des sens perpendiculaires au sens de transmission et de seconds miroirs (32) qui oscillent à l'unisson avec eux à des localisations équidistantes sur une périphérie des axes de rotation (30) en étant raccordés aux axes de rotation (30) des premiers miroirs (31) à travers des bras (34) qui sont perpendiculaires aux sens des axes de rotation (30) des premiers miroirs (31) et en outre qui oscillent sur les axes de rotation (30) dans des sens horizontaux, et des régions de surface frittée (6) produites par l'irradiation des faisceaux laser (7) qui ont été transmis à travers chaque galvano scanner (3) pouvant être librement sélectionné par l'ajustement libre d'une plage d'oscillations de chaque premier miroir (31) et plage d'oscillations de chaque second miroir (32), et les faisceaux laser (7) sont irradiés sur la surface frittée (6) à une localisation de focalisation ou son voisinage par l'ajustement des distances focales des lentilles à focalisation dynamique (2), et chaque premier miroir (31) est disposé sur un côté externe depuis chaque second miroir (32) en référence à une localisation centrale (P) d'une surface de la table (4).

3. Appareil de façonnage tridimensionnel comprenant un racleur qui stratifie une poudre sur une table (4) en se déplaçant sur celle-ci, un appareil de frittage qui irradie une couche de poudre (5) avec des faisceaux laser (7), et un outil de coupe pour couper une couche frittée tout en se déplaçant, dans lequel, durant l'irradiation, une pluralité de galvano scanners (3) sont utilisés pour exécuter un balayage dans des sens bidimensionnels sur la base de coordonnées orthogonales des faisceaux laser (7) qui ont été transmis à travers des lentilles à focalisation dynamique (2) par réflexion des faisceaux laser (7) depuis de premiers miroirs (31) qui oscillent sur des axes de rotation (30) dans des sens perpendiculaires au sens de transmission et de seconds miroirs (32) qui sont perpendiculaires aux sens des axes de rotation (30) des premiers miroirs (31) sous un état indépendant de l'oscillation des premiers miroirs (31) et qui oscillent sur les axes de rotation (30) dans des sens horizontaux, et des dispositifs de commande permettant un ajustement libre des plages d'oscillations de l'unité d'entraînement d'oscillation (310) pour chaque premier miroir (31) et une unité d'entraînement d'oscillation (320) pour chaque second miroir (32) sont prévus pour permettre une sélection libre des régions de surface frittée (6) produites par l'irradiation des faisceaux laser (6), et les faisceaux laser (7) sont irradiés sur la surface frittée (6) à une localisation de focalisation ou son voisinage par l'ajustement des distances focales des lentilles à focalisation dynamique (2), **caractérisé en ce que** chaque premier miroir (31) est disposé sur un côté externe depuis chaque second miroir (32) en référence à une localisation centrale (P) d'une surface de la table (4).

4. Appareil de façonnage tridimensionnel comprenant un racleur qui stratifie une poudre sur une table (4) en se déplaçant sur celle-ci, un appareil de frittage qui irradie une couche de poudre (5) avec des faisceaux laser (7), et un outil de coupe pour couper une couche frittée tout en se déplaçant, dans lequel, durant l'irradiation, une pluralité de galvano scanners (3) sont utilisés pour exécuter un balayage dans des sens bidimensionnels sur la base de coordonnées cylindriques des faisceaux laser (7) qui ont été transmis à travers des lentilles à focalisation dynamique (2) par réflexion des faisceaux laser (7) depuis de premiers miroirs (31) qui oscillent sur des axes de rotation (7) dans des sens perpendiculaires au sens de transmission et de seconds miroirs (32) qui oscillent à l'unisson avec eux à des localisations équidistantes sur une périphérie des axes de rotation (30) en étant raccordés aux axes de rotation (30) des premiers miroirs (31) à travers des bras (34) qui sont perpendiculaires aux sens des axes de rotation (30) des premiers miroirs (31) et en outre qui oscillent sur les axes de rotation (30) dans des sens horizontaux, et des dispositifs de commande permettant un ajustement libre d'une plage d'oscillations de l'unité d'entraînement d'oscillation (310) pour chaque premier miroir (31) et plage d'oscillations de l'unité d'entraînement d'oscillation (320) pour chaque second miroir (32) sont prévus pour permettre une sélection libre des régions de surface frittée (6) produites par l'irradiation des faisceaux laser (7), et les faisceaux laser (7) sont irradiés sur la surface frittée (6) à une localisation de focalisation ou son voisinage par un ajustement des distances focales des lentilles à focalisation dynamique (2), et chaque premier miroir (31) est disposé sur un côté externe depuis chaque second miroir (32) en référence à une localisation centrale (P) d'une surface de la table (4).

5. Procédé de façonnage tridimensionnel selon l'une quelconque des revendications 1 ou 2, le premier miroir (31) de chaque galvano scanner (3) oscillant sur un axe de rotation (30) dans le sens vertical perpendiculaire à la surface de la table (4).

6. Appareil de façonnage tridimensionnel selon l'une quelconque des revendications 3 ou 4, le premier miroir (31) de chaque galvano scanner (3) oscillant sur un axe de rotation (30) dans le sens vertical perpendiculaire à la surface de la table (4).

7. Procédé de façonnage tridimensionnel selon l'une quelconque des revendications 1 ou 2, le premier miroir (31) de chaque galvano scanner (3) oscillant sur un axe de rotation (30) dans un sens incliné par rapport à la surface de la table (4).

8. Appareil de façonnage tridimensionnel selon l'une quelconque des revendications 3 ou 4, le premier miroir (31) de chaque galvano scanner (3) oscillant sur un axe de rotation (30) dans un sens incliné par rapport à la surface de la table (4).

9. Procédé de façonnage tridimensionnel selon l'une quelconque des revendications 1 ou 2, selon lequel, durant l'oscillation du second miroir (32) de chaque galvano scanner (3), la lumière reflétée au stade de façonnage de la localisation centrale (P) d'amplitude par oscillation se trouve dans un sens incliné par rapport à la surface de la table (4).

10. Appareil de façonnage tridimensionnel selon l'une quelconque des revendications 3 ou 4, dans lequel, durant l'oscillation du second miroir (32) de chaque galvano scanner (3), la lumière reflétée au stade de façonnage de la localisation centrale (P) d'amplitude par oscillation se trouve dans un sens incliné par rapport à la surface de la table (4).

[Fig.1]

(a)

(b)

[Fig. 2]

(a)

(b)

[Fig. 3]

[Fig. 4]

[Fig.5]

(a)

(b)

Scanning line of
reflected light at edge
in × direction

Scanning line of
reflected light at edge
in ● direction

(c)

Scanning line of
reflected light at edge
in × direction

Scanning line of
reflected light at edge
in ● direction

[Fig. 6]
(a)

(b)

[Fig. 7]

(a)

(b)

(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019151945 A1
- US 2015283611 A1
- US 10029333 B2
- US 9314972 B2